# EUROPÄISCHE PATENTSCHRIFT

(11) **EP 3 220 112 B1**
(45) Veröffentlichungstag und Bekanntmachung des Hinweises auf die Patenterteilung: **24.05.2023**
(21) Anmeldenummer: 17158457.6
(22) Anmeldetag: 28.02.2017
(51) Int. Cl.: G01J 3/28, G02B 5/20, B41M 3/14

(54) **VORRICHTUNG MIT WENIGSTENS EINEM OPTISCHEN SENSORMODUL UND BETRIEBSVERFAHREN HIERFÜR**
DEVICE WITH AT LEAST ONE OPTICAL SENSOR MODULE AND OPERATING METHOD FOR SAME
DISPOSITIF COMPRENANT AU MOIS UN MODULE DE CAPTEUR OPTIQUE ET PROCÉDÉ DE FONCTIONNEMENT ASSOCIÉ

(30) Priorität: 01.03.2016 DE 102016103684
(43) Veröffentlichungstag der Anmeldung: 20.09.2017
(73) Patentinhaber: Matrix Vision GmbH Bildverarbeitung, 71570 Oppenweiler (DE)
(72) Erfinder: Furtner, Uwe, 74182 Obersulm (DE)
(74) Vertreter: DREISS Patentanwälte PartG mbB

(56) Entgegenhaltungen:
- WO-A1-00/77104
- WO-A1-02/20696
- WO-A1-2007/056102
- WO-A1-2014/140431

## Beschreibung

Die Erfindung betrifft eine Vorrichtung mit wenigstens einem optischen Sensormodul und ein Betriebsverfahren für eine derartige Vorrichtung.

WO 2014/140431 A1 beschreibt ein Verfahren zum Anbringen einer Sicherheitsmarkierung an einem Objekt. Es sind fotoaktive Nanopartikel beschrieben, die Strahlung im sichtbaren und nahen Infrarot-Bereich emittieren, wenn sie mit UV-Strahlung oder Strahlung aus dem nahen Infrarotbereich angeregt werden.

WO 02/20696 A1 beschreibt ein Verfahren zur Herstellung fluoreszierender anorganischer Nanopartikel.

WO 00/77104 A1 beschreibt eine Sicherheitstinte.

WO 2007/056102 A1 beschreibt ein multispektrales Bildgebungsverfahren.

Es ist Aufgabe der vorliegenden Erfindung, eine Vorrichtung und ein Betriebsverfahren der eingangs genannten Art dahingehend zu verbessern, dass eine kostengünstige Fertigung, ein effizienter Betrieb und eine zuverlässige Erkennung von Druckfarben bzw. Sicherheitsfarben gegeben sind.

Diese Aufgabe wird mit einem System gemäß des Patentanspruchs 1 gelöst.

Unter einer Filterkurve der optischen Filtereinrichtung wird hierbei eine optische Übertragungsfunktion der optischen Filtereinrichtung verstanden, welche vorliegend im Wesentlichen durch einen ersten auch als Durchlassbereich bezeichneten Wellenlängenbereich charakterisiert ist, sowie einen (beidseitig, d.h. zu größeren und kleineren Wellenlängen außerhalb des Durchlassbereichs hin) außerhalb des Durchlassbereichs liegenden Sperrbereich. Licht bzw. elektromagnetische Strahlung mit Wellenlängen innerhalb des Durchlassbereichs kann die optische Filtereinrichtung somit im Wesentlichen unverändert (allenfalls geringfügig gedämpft durch die Transmissionsdämpfung des Filtermediums) durchdringen, wohingegen Licht bzw. elektromagnetische Strahlung mit Wellenlängen außerhalb des Durchlassbereichs eine vergleichsweise große Dämpfung im Bereich des Filtermediums erfährt.

Unter dem Ausdruck "wenigstens zwei verschiedene Filterkurven" wird vorliegend verstanden, dass die Filtereinrichtung wenigstens zwei voneinander verschiedene, also in verschiedenen Wellenlängenbereichen liegende, Durchlassbereiche aufweist. Bei manchen Ausführungsformen können sich die Randbereiche der zwei Filterkurven bzw. die Randbereiche ihrer Durchlassbereiche ggf. teilweise überlappen. Bei besonders bevorzugten Ausführungsformen sind jedoch die Durchlassbereiche von zueinander im Spektrum benachbarten Filterkurven so angeordnet, dass sie einander nicht überlappen.

Durch die erfindungsgemäße Realisierung von wenigstens zwei verschiedenen Filterkurven ist es möglich, dem Bildsensor selektiv Licht unterschiedlicher Spektralbereiche zuzuleiten, die den Durchlassbereichen der betreffenden Filterkurven entsprechen. Mit anderen Worten kann dadurch Licht, das in dem Wellenlängenbereich liegt, welcher von dem Bildsensor abgedeckt wird, in den Durchlassbereichen der verschiedenen Filterkurven abgetastet werden. Damit gelangt i.w. nur solches Licht aus einem beobachteten Bereich zu dem Bildsensor, welches Wellenlängenanteile aufweist, die wenigstens einem Durchlassbereich einer Filterkurve der Filtereinrichtung entsprechen. Dadurch kann vorteilhaft insbesondere ein von einer bestimmten vorgegebenen Farbe, insbesondere von einer Sicherheitsfarbe, ausgehendes Licht, welches üblicherweise nichtverschwindende Strahlungsintensitäten in speziellen vorgebbaren Wellenlängenbereichen aufweist, detektiert und ausgewertet werden.

Bei einer besonders bevorzugten Ausführungsform weist die optische Filtereinrichtung wenigstens einen ersten, vorzugsweise schmalbandigen, optischen Filter auf, der beispielsweise eine erste Filterkurve für die Filtereinrichtung bereitstellt.

Bei einer weiteren vorteilhaften Ausführungsform ist vorgesehen, dass die optische Filtereinrichtung wenigstens zwei, vorzugsweise jeweils schmalbandige, optische Filter aufweist, deren Durchlassbereiche sich insbesondere voneinander unterscheiden.

Bei einer weiteren vorteilhaften Ausführungsform ist vorgesehen, dass die optische Filtereinrichtung vier, vorzugsweise jeweils schmalbandige, optische Filter aufweist, deren Durchlassbereich es sich insbesondere voneinander unterscheiden.

Bei anderen Ausführungsformen ist auch eine abweichende Anzahl von optischen Filtern, insbesondere von jeweils schmalbandigen optischen Filtern, denkbar. Beispielsweise können anderen Ausführungsformen zufolge Filtereinrichtungen mit 3 oder 5 oder auch mehr optischen Filtern zum Einsatz kommen, von denen bevorzugt jeweils mindestens 2 untereinander voneinander verschiedene Durchlassbereiche aufweisen.

Gemäß einer weiteren Ausführungsform ist wenigstens einer der vorstehend genannten optischen Filter als schmalbandiger Filter ausgebildet. Hierunter wird vorliegend ein optischer Filter verstanden, der einen Durchlassbereich von einigen Nanometern (nm) aufweist, besonders bevorzugt einen Durchlassbereich zwischen etwa 1 nm und etwa 10 nm.

Weiteren Ausführungsformen zufolge kann wenigstens einer der vorstehend genannten optischen Filter einen Durchlassbereich von einigen 10 nm aufweisen, besonders bevorzugt einen Durchlassbereich zwischen etwa 10 nm und etwa 50 nm.

Bei einer weiteren vorteilhaften Ausführungsform ist die optische Filtereinrichtung auf dem Bildsensor angeordnet. Insbesondere kann die optische Filtereinrichtung auf einer optischen Oberfläche des Bildsensors aufgebracht sein, beispielsweise in Form einer Beschichtung.

Bei einer weiteren vorteilhaften Ausführungsform ist wenigstens eine Lichtquelle zur Beleuchtung des Objekts mit einem ersten Licht vorgesehen, wobei ein Spektrum des ersten Lichts einen Wellenlängenbereich einer Flanke einer Spektralcharakteristik der Sicherheitsfarbe aufweist. Mit anderen Worten weist das erste Licht eine nichtverschwindende Intensität unter anderem in dem Wellenlängenbereich auf, der auch die Flanke der Spektralcharakteristik der Sicherheitsfarbe aufweist.

Bekannte Sicherheitsfarben weisen beispielsweise für Licht bzw. elektromagnetische Strahlung unterschiedlicher Wellenlängen ein unterschiedliches Reflexionsverhalten bzw. Transmissionsverhalten auf, wobei beispielsweise die vorstehend genannte Flanke der Spektralcharakteristik der Sicherheitsfarbe einen Übergang von ersten Reflexionseigenschaften bzw. Transmissionseigenschaften (z.B. Transparenz für Strahlung eines ersten Wellenlängenbereichs) der Sicherheitsfarbe zu zweiten Reflexionseigenschaften bzw. Transmissionseigenschaften (z.B. Absorption von Strahlung des ersten Wellenlängenbereichs) der Sicherheitsfarbe charakterisiert. Dadurch, dass der vorliegenden Ausführungsform zufolge das gegebenenfalls eine Markierung mit der vorstehend genannten Sicherheitsfarbe enthaltende Objekt mit dem ersten Licht beleuchtet wird, dessen Spektrum den Wellenlängenbereich der Flanke der Spektralcharakteristik der Sicherheitsfarbe aufweist, kann durch die erfindungsgemäße optische Filtereinrichtung vorteilhaft ermittelt werden, ob ein an dem Objekt bzw. gegebenenfalls der Markierung mit der Sicherheitsfarbe reflektiertes zweites Licht spektrale Anteile aufweist, die darauf schließen lassen, dass das zweite Licht durch Reflexion des genannten ersten Lichts an einem Objekt mit der Sicherheitsfarbe erhalten worden ist.

Mit anderen Worten kann dadurch erfindungsgemäß vorteilhaft festgestellt werden, ob eine unter Verwendung der vorstehend genannten Sicherheitsfarbe hergestellte Markierung auf dem Objekt angeordnet ist.

Besonders bevorzugt ist bei einer Ausführungsform die Lichtquelle dazu ausgebildet, eine konstante (d.h. zeitlich i.w. nicht veränderliche Intensität aufweisende), beispielsweise diffuse, Beleuchtung des zu untersuchenden Objekts zu bewirken. Alternativ oder ergänzend kann eine Auflichtbeleuchtung vorgesehen sein. Optional kann die Auflichtbeleuchtung auch mit einem Polarisationsfilter kombiniert werden.

Sofern eine Umgebungsbeleuchtung wie beispielsweise Tageslicht oder künstliches Licht innerhalb eines Gebäudes vorhanden ist, welches ebenfalls den Wellenlängenbereich der vorstehend genannten Flanke der Spektralcharakteristik der Spezialfarbe aufweist, also eine nichtverschwindende Intensität unter anderem in dem Wellenlängenbereich besitzt, der auch die Flanke der Spektralcharakteristik der Sicherheitsfarbe aufweist, kann weiteren Ausführungsformen zufolge gegebenenfalls auf die Lichtquelle verzichtet werden, und das vorhandene Umgebungslicht zur Beleuchtung des Objekts genutzt werden.

Bei weiteren vorteilhaften Ausführungsformen kann eine Lichtquelle zur Beleuchtung des Objekts vorgesehen sein, deren Licht ein im wesentlichen kontinuierliches Spektrum aufweist, wobei insbesondere die genannte Flanke der Spektralcharakteristik der Sicherheitsfarbe innerhalb des kontinuierlichen Spektrums liegt.

Bei weiteren vorteilhaften Ausführungsformen kann eine Lichtquelle zur Beleuchtung des Objekts vorgesehen sein, deren Licht kein kontinuierliches Spektrum aufweist, sondern vielmehr mehrere Teilspektren, die aneinandergrenzen oder einander überlappen können, aber nicht notwendig aneinandergrenzen bzw. einander überlappen müssen. In diesem Fall befindet sich vorteilhaft wenigstens ein erstes der mehreren Teilspektren des Lichts in einem ersten Wellenlängenbereich der Spektralcharakteristik der Sicherheitsfarbe diesseits der Flanke der Spektralcharakteristik der Sicherheitsfarbe, und wenigstens ein zweites der mehreren Teilspektren des Lichts befindet sich in einem zweiten Wellenlängenbereich der Spektralcharakteristik der Sicherheitsfarbe, welcher jenseits der Flanke liegt. Beispielsweise kann die optische Filtereinrichtung bei dieser Ausführungsform derart auf das Licht abgestimmt sein, dass eine erste Filterkurve dem ersten Teilspektrum zugeordnet ist, und dass eine zweite Filterkurve dem zweiten Teilspektrum zugeordnet ist.

Bei einer weiteren vorteilhaften Ausführungsform ist vorgesehen, dass wenigstens einer der optischen Filter, vorzugsweise jedoch alle der optischen Filter, gleichmäßig über den Bildelementen des Bildsensors verteilt ist bzw. verteilt sind. Die Anordnung des bzw. der optischen Filter kann hierbei vorzugsweise analog zu der Anordnung von Farbfiltern gemäß dem Prinzip des Bayer-Filters bzw. der Bayer-Matrix erfolgen, bei dem ein Bildsensor über seine gesamte optisch aktive Oberfläche hinweg im Wesentlichen gleichmäßig mit Farbfiltern für die Grundfarben Rot, Grün, Blau versehen ist. Bei der Ausführungsform gemäß der vorliegenden Erfindung sind jedoch die Filterkurven bzw. ihre Durchlassbereiche nicht auf die zentralen Wellenlängen der vorstehend genannten Grundfarben ausgerichtet, sondern vielmehr auf die spektralen Eigenschaften der zu detektierenden Sicherheitsfarbe.

Bei einer weiteren vorteilhaften Ausführungsform ist vorgesehen, dass der mindestens eine Bildsensor eine matrixförmige Anordnung von Bildelementen aufweist, die in Reihen und Spalten angeordnet sind, wobei die optische Filtereinrichtung vier schmalbandige optische Filter mit jeweils unterschiedlichem Durchlassbereich aufweist, wobei insbesondere in einer ersten Zeile von Bildelementen in aufeinanderfolgenden Spalten von Bildelementen ein erster optischer Filter und ein zweiter optischer Filter der vier schmalbandigen optischen Filter angeordnet sind, wobei insbesondere in einer auf die erste Zeile folgenden zweiten Zeile von Bildelementen in aufeinanderfolgenden Spalten der Bildelemente ein dritter optischer Filter und ein vierter optischer Filter der vier schmalbandigen optischen Filter angeordnet sind, und wobei insbesondere sich eine Verteilung der vier schmalbandigen optischen Filter für die weiteren Zeilen von Bildelementen des Bildsensors gemäß der ersten Zeile und der zweiten Zeile wiederholt. Auf diese Weise ist eine besonders gleichmäßige Erfassung des Originalbilds und eine möglichst präzise Auswertung, insbesondere Detektion der Sicherheitsfarbe, ermöglicht.

Beispielsweise können hierdurch jeweils vier Spektralwerte mittels vier zueinander benachbarter Bildelemente erfasst werden. Optional können diese vier Bildelemente auch als vier Teilelemente bzw. Farbkomponenten eines übergeordneten Bildelements aufgefasst werden, welches übergeordnete Bildelement vorliegend vier "Farbkomponenten" aufweist, nämlich die mit den Durchlassbereichen der vier optischen Filter korrespondierenden Wellenlängenbereiche.

Bei einer weiteren vorteilhaften Ausführungsform ist vorgesehen, dass eine Steuereinrichtung vorgesehen ist, die zur Steuerung eines Betriebs des Sensormoduls und/oder zur Steuerung eines Betriebs der Lichtquelle ausgebildet ist, wobei insbesondere die Steuereinrichtung zur Ausführung wenigstens eines der nachfolgenden Verfahren ausgebildet ist: Erkennen wenigstens eines Strichcodes (Barcode) und/oder sonstigen eindimensionalen oder mehrdimensionalen Codes (z.B. QR-Code) auf dem Originalbild, Analyse einer Bewegung wenigstens eines Objekts, Kommunikation mit einer externen Einheit (beispielsweise einer Steuereinheit für einen Pfandgut-Rücknahmeautomaten), Steuerung einer externen Einheit (z.B. Pfandgut-Rücknahmeautomat), Auslesen von Daten des Bildsensors. Bei weiteren vorteilhaften Ausführungsformen kann vorgesehen sein, dass wenigstens ein Aspekt oder auch mehrere Aspekte der vorstehend genannten Funktionalität der Steuereinrichtung in das optische Sensormodul integriert ist bzw. sind.

Besonders vorteilhaft sind bei der Anwendung des erfindungsgemäßen Prinzips alle Bildbereiche des Originalbilds in der vollen Ortsauflösung vorhanden, so dass insbesondere auch eine Bildverarbeitung bzw. Erkennung von Barcodes und dergleichen unter Verwendung des Originalbilds ausgeführt werden können.

Bei einer weiteren vorteilhaften Ausführungsform ist vorgesehen, dass der mindestens eine Bildsensor ein CMOS (complementary metal-oxide semiconductor)-Sensor oder CCD (charge coupled device)-Sensor oder Super-CCD-Sensor ist.

Bei einer weiteren vorteilhaften Ausführungsform ist die Vorrichtung dazu ausgebildet, eine spektrale Zusammensetzung wenigstens eines Bildbereichs des Originalbilds auf einen Übereinstimmungsgrad mit der Sicherheitsfarbe hin zu überprüfen. Beispielsweise kann hierzu vorgesehen sein, dass die Vorrichtung bzw. eine ihrer Komponenten wie beispielsweise ein Sensormodul bzw. eine Steuereinheit den Übereinstimmungsgrad ermittelt.

Bei einer weiteren besonders bevorzugten Ausführungsform ist die Vorrichtung dazu ausgebildet, Originalbilder mit einer Rate von wenigstens 30 Bildern je Sekunde oder mehr aufzunehmen, wodurch eine sehr schnelle Erfassung und Auswertung ermöglicht ist. Insbesondere erlaubt eine hohe Bildrate auch die Erfassung von schnellen Bewegungen von Objekten und deren Erkennung.

Besonders bevorzugt ist die Vorrichtung bei einer weiteren Ausführungsform dazu ausgebildet, wenigstens ein Sicherheitszeichen in dem Originalbild aufzufinden. Das Sicherheitszeichen kann beispielsweise ein alphabetisches Zeichen bzw. eine Kombination hieraus oder ein geometrisches Element oder eine Kombination mehrerer geometrischer Elemente oder ganz allgemein eine Grafik umfassen, die unter Anwendung herkömmlicher Algorithmen zur Bildverarbeitung bzw. Bilderkennung in Abhängigkeit des Originalbilds ermittelt werden können. Auf diese Weise kann überprüft werden, ob beispielsweise überhaupt ein solches Sicherheitszeichen auf einem Objekt aufgebrachten bzw. in dem Originalbild enthalten ist. Zusätzlich kann durch das erfindungsgemäße Prinzip und die damit zusammenhängende spektrale Auswertung vorteilhaft auch das tatsächliche Vorhandensein einer Sicherheitsfarbe ermittelt werden, sodass festgestellt werden kann, ob ein erkanntes Sicherheitszeichen auch unter Verwendung der Sicherheitsfarbe hergestellt worden ist.

Bei einer weiteren besonders bevorzugten Ausführungsform ist wenigstens ein erster Bildsensor und ein zweiter Bildsensor, z.B. zwei CCD- oder CMOS-Bildsensorchips, vorgesehen, wobei die optische Filtereinrichtung wenigstens einen ersten dem ersten Bildsensor zugeordneten optischen Filter und wenigstens einen zweiten dem zweiten Bildsensor zugeordneten optischen Filter aufweist, wobei die Vorrichtung dazu ausgebildet ist, mittels des ersten Bildsensors wenigstens ein erstes Originalbild und mittels des zweiten Bildsensors wenigstens ein zweites Originalbild des Objekts aufzunehmen und in Abhängigkeit des wenigstens einen ersten und des wenigstens einen zweiten Originalbilds des Objekts auf das Vorhandensein der Farbe, insbesondere der Sicherheitsfarbe, auf dem Objekt zu schließen.

Bei einer weiteren bevorzugten Ausführungsform ist der erste optische Filter vorzugsweise flächig, also insbesondere gleichmäßig über allen Bildelementen, des ersten Bildsensors und der zweite optische Filter vorzugsweise flächig, also insbesondere gleichmäßig über allen Bildelementen, des zweiten Bildsensors angeordnet bzw. aufgebracht, z.B. in Form einer jeweiligen Beschichtung. Alternativ oder ergänzend kann ein entsprechender Filter auf bzw. vor dem jeweiligen Bildsensor angeordnet sein. Der Filter kann beispielsweise wenigstens ein Filterglas aufweisen. Generell kann bei weiteren Ausführungsformen ein entsprechender Filter auch an einem anderen Ort in dem Strahlengang zwischen Objekt und Bildsensor angeordnet sein, z.B. zwischen einem optional vorhandenen Objektiv und dem Bildsensor oder zwischen Objekt und optionalem Objektiv, also z.B. vor bzw. auf dem Objektiv. Damit kann der erste Bildsensor gleichsam eine erste spektrale Abtastung vornehmen, die dem ersten optischen Filter bzw. seinem Durchlassbereich, entspricht, und es kann der zweite Bildsensor gleichsam eine zweite spektrale Abtastung vornehmen, die dem zweiten optischen Filter bzw. seinem Durchlassbereich, entspricht. Bevorzugt sind die Durchlassbereiche der Filter wiederum so angeordnet, dass die Flanke der Spektralcharakteristik der zu erkennenden (Sicherheits-)Farbe zwischen ihnen liegt.

Als eine weitere Lösung der Aufgabe der vorliegenden Erfindung ist ein Verfahren gemäß Patentanspruch 15 angegeben.

Bei einer bevorzugten Ausführungsform des Verfahrens ist vorgesehen, dass eine spektrale Zusammensetzung wenigstens eines Bildbereichs des Originalbilds auf einen Übereinstimmungsgrad mit der Sicherheitsfarbe hin überprüft wird.

Nachfolgend werden beispielhafte Ausführungsformen der Erfindung unter Bezugnahme auf die Zeichnung erläutert. In der Zeichnung zeigt:
- Figur 1: schematisch ein Blockdiagramm einer Ausführungsform der erfindungsgemäßen Vorrichtung,
- Figur 2: schematisch einen Bereich einer Wellenlänge elektromagnetischer Strahlung gemäß einer Ausführungsform,
- Figur 3: schematisch einen Bildsensor mit Filtereinrichtung gemäß einer Ausführungsform,
- Figur 4: schematisch ein Blockdiagramm einer weiteren Ausführungsform der erfindungsgemäßen Vorrichtung,
- Figur 5: schematisch ein vereinfachtes Flussdiagramm einer Ausführungsform des erfindungsgemäßen Verfahrens,
- Figur 6: schematisch ein Originalbild gemäß einer Ausführungsform, und
- Figur 7: schematisch ein Blockdiagramm einer weiteren Ausführungsform der erfindungsgemäßen Vorrichtung.

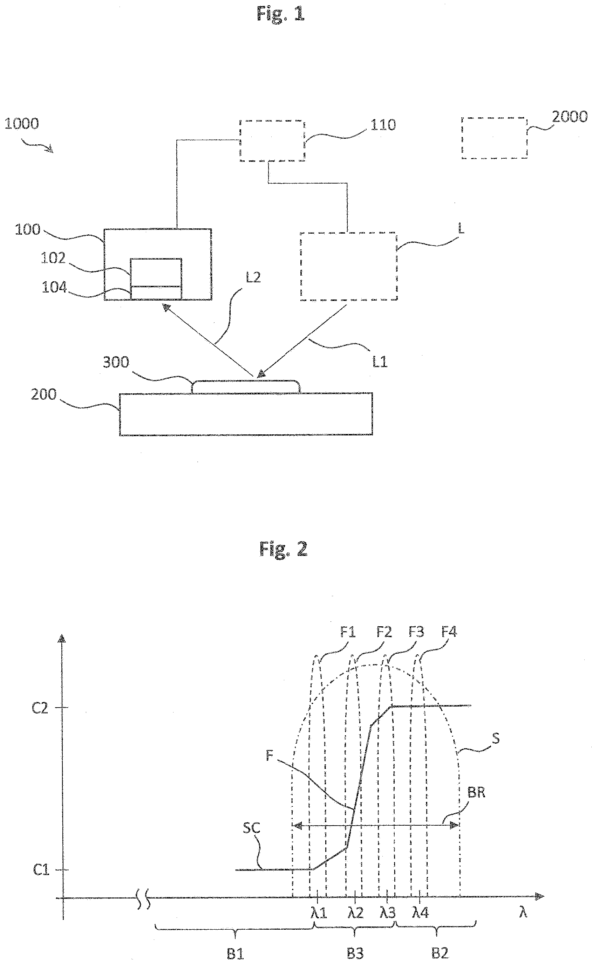

Figur 1 zeigt schematisch ein Blockdiagramm einer Ausführungsform einer erfindungsgemäßen Vorrichtung 1000. Die Vorrichtung 1000 weist ein optisches Sensormodul 100 auf, welches wenigstens einen Bildsensor 102 und eine dem Bildsensor 102 zugeordnete optische Filtereinrichtung 104 aufweist.

Der Bildsensor 102 ist beispielsweise als CMOS-Sensor oder als (Super-)CCD-Sensor ausgebildet. Die Filtereinrichtung 104 ist bei manchen Ausführungsformen bevorzugt auf einer optisch aktiven Oberfläche des Bildsensors 102 angeordnet, insbesondere auf dieser aufgebracht, beispielsweise in Form einer oder mehrerer Beschichtungen.

Die Vorrichtung 1000 ist dazu ausgebildet, mittels des Bildsensors 102 wenigstens ein Originalbild eines Objekts 200 aufzunehmen und in Abhängigkeit des wenigstens einen Originalbilds des Objekts 200 auf das Vorhandensein einer vorgebbaren Farbe, insbesondere Sicherheitsfarbe 300, auf dem Objekt 200 bzw. auf seiner Oberfläche zu schließen. Optional kann ein Objektiv (nicht gezeigt) in dem Strahlengang zwischen Objekt 200 und dem Sensormodul 100 angeordnet sein, das z.B. auch in das Sensormodul 100 integriert bzw. an diesem angebaut sein kann.

Bei dem Objekt 200 kann es sich beispielsweise um ein Wertstoffobjekt handeln, wie beispielsweise einen Getränkebehälter aus einem wiederverwertbaren Kunststoffmaterial oder dergleichen, das an hierfür vorgesehenen Annahmestellen entgegengenommen und gesammelt werden kann, beispielsweise um einer Wiederverwertung zugeführt zu werden. Zur Überprüfung der Echtheit des Wertstoffobjekts 200 kann auf seiner Oberfläche ein Sicherheitsmerkmal wie beispielsweise ein Sicherheitszeichen angeordnet sein, bei dem es sich beispielsweise um einen Aufdruck bzw. allgemein um eine vorgebbare geometrische Form handeln kann, welche üblicherweise mittels einer Sicherheitsfarbe 300 bzw. Sicherheitstinte auf die Oberfläche aufgebracht wird. Beispielsweise kann das Sicherheitsmerkmal direkt auf die Oberfläche des Objekts 200 aufgedruckt werden und/oder auf ein Etikett bzw. eine Banderole des Objekts 200. Es ist ebenfalls denkbar, zunächst Etiketten bzw. Banderolen für das Objekt 200 zu fertigen, diese mit dem Sicherheitsmerkmal zu versehen, und das so ergänzte Etikett bzw. die so ergänzte Banderole auf das Objekt 200 aufzubringen, beispielsweise mittels Kleben.

Die Sicherheitsfarbe 300 hat spezielle, in der Regel wellenlängenabhängige, Reflexions- bzw. Transmissionseigenschaften. Bekannte Sicherheitsfarben weisen beispielsweise für ein erstes einfallendes Licht L1 unterschiedlicher Wellenlängen ein unterschiedliches Reflexionsverhalten bzw. Transmissionsverhalten auf, wobei beispielsweise ein wellenlängenabhängiger Übergang von ersten Reflexionseigenschaften bzw. Transmissionseigenschaften (z.B. Transparenz für Strahlung eines ersten Wellenlängenbereichs) der Sicherheitsfarbe zu zweiten Reflexionseigenschaften bzw. Transmissionseigenschaften (z.B. Absorption von Strahlung eines zweiten Wellenlängenbereichs) der Sicherheitsfarbe gegeben ist, wobei dieser Übergang zwischen den unterschiedlichen Reflexionseigenschaften bzw. Transmissionseigenschaften durch eine sogenannte "Flanke" in der Spektralcharakteristik der Sicherheitsfarbe 300 charakterisiert ist.

Die vorstehend beschriebenen Eigenschaften bezüglich der Spektralcharakteristik sind auch bei vielen anderen Druckfarben zumindest in ähnlicher Weise gegeben. Beispielsweise kann bei anderen Farben bzw. Druckfarben bzw. anderen Sicherheitsfarben die Flanke im Bereich einer anderen Wellenlänge sein. Insoweit ist das erfindungsgemäße Prinzip auch auf diese (anderen) (Druck-)Farben anwendbar.

Figur 2 zeigt hierzu einen Verlauf der Spektralcharakteristik SC einer marktüblichen Sicherheitsfarbe über einer Wellenlänge λ von Licht bzw. elektromagnetischer Strahlung. Wie aus Figur 2 ersichtlich ist, weist die Spektralcharakteristik SC in einem ersten Wellenlängenbereich B1 eine im Wesentlichen konstante erste Amplitude C1 auf, wodurch ein erstes Transmissionsverhalten der Sicherheitsfarbe für Wellenlängen des ersten Wellenlängenbereichs B1 charakterisiert ist. In einem zweiten Wellenlängenbereich B2 weist die Spektralcharakteristik SC eine im Wesentlichen konstante zweite Amplitude C2 auf, die von der ersten Amplitude C1 verschieden (vorliegend: größer) ist, wodurch ein zweites Transmissionsverhalten der Sicherheitsfarbe für Wellenlängen des zweiten Wellenlängenbereichs B2 charakterisiert ist. In einem zwischen dem ersten Wellenlängenbereich B1 und dem zweiten Wellenlängenbereich B2 liegenden dritten Wellenlängenbereich B3 ergibt sich der in Figur 2 ebenfalls abgebildete Übergang der Spektralcharakteristik SC, vgl. die Flanke F.

Bei manchen Ausführungsformen ist beispielsweise denkbar, eine Sicherheitsfarbe bereitzustellen, deren erstes Transmissionsverhalten sich in einem ersten Wellenlängenbereich B1 erstreckt, der im Wesentlichen den Bereich das für Menschen sichtbare Wellenlängenspektrums zwischen etwa 400 nm und etwa 780 nm abdeckt, und deren zweites Transmissionsverhalten sich in einem zweiten Wellenlängenbereich B2 erstreckt, der durch Wellenlängen größer etwa 800 nm (zum Beispiel bis etwa 1000 nm) charakterisiert ist. In diesem Fall erstreckt sich der Übergangsbereich B3 bzw. die Flanke F zwischen etwa 780 nm und etwa 800 nm.

Bei anderen Ausführungsformen ist es auch denkbar, eine Sicherheitsfarbe bereitzustellen, bei der sich der Übergangsbereich B3 bzw. die Flanke F ihrer Spektralcharakteristik SC zwischen etwa 520 nm und etwa 560 nm befindet, also im Bereich der Farbe Grün, oder auch in anderen Farbbereichen.

Ebenfalls in Figur 2 abgebildet sind vier Filterkurven F1, F2, F3, F4, wie sie beispielsweise bei einer bevorzugten Ausführungsform durch die optische Filtereinrichtung 104 gemäß Figur 1 realisiert sind.

Jede Filterkurve entspricht einer optischen Übertragungsfunktion, wie sie insgesamt (in kumulierter Weise) durch die Filtereinrichtung 104 realisiert ist. Beispielhaft weist die erste Filterkurve F1 einen Durchlassbereich um die Wellenlänge λ1 herum auf. Die weiteren Filterkurven F2, F3, F4 entsprechen optischen Übertragungsfunktionen mit jeweiligen Durchlassbereichen im Bereich der Wellenlängen λ2, A3, λ4, wobei vorliegend gilt: λ4 > λ3 > λ2 > λ1.

Dadurch ermöglicht die Filtereinrichtung 104 (Figur 1) vorteilhaft, das Spektrum der elektromagnetischen Wellen um die Wellenlängen λ1, λ2, λ3, A4 herum "abzutasten", mithin Licht im Bereich der jeweiligen Durchlassbereiche zu dem Bildsensor 102 dringen zu lassen. Somit kann der um die Flanke F liegende Wellenlängenbereich besonders präzise spektral abgetastet und mittels des Bildsensors 102 (Figur 1) erfasst werden.

Bei weiteren Ausführungsformen sind für andere Farben bzw. Druckfarben auch andere Verläufe der Spektralcharakteristik SC vorstellbar. Generell ist auch vorstellbar, dass bei anderen Farben die Charakteristik SC beispielsweise bei der Wellenlänge λ4 größere Werte aufweist als bei der Wellenlänge λ1, usw.

Bevorzugt wird das Objekt 200 (Figur 1) bzw. die darauf ggf. angebrachte Sicherheitsfarbe 300 mit einem ersten Licht L1 (Figur 1) beleuchtet, welches beispielsweise ein im Wesentlichen kontinuierliches Spektrum S (Figur 2) innerhalb eines vorgegebenen Wellenlängenbereichs abdeckt. Vorliegend deckt das Spektrum S beispielsweise den Übergangsbereich B3 sowie angrenzend hierzu Teile von dem ersten Wellenlängenbereich B1 und von dem zweiten Wellenlängenbereich B2 ab.

Besonders bevorzugt weist das Spektrum S des ersten Lichts L1 bei weiteren Ausführungsformen eine Breite BR (Fig. 2) von wenigstens etwa 30 nm auf, weiter bevorzugt wenigstens eine Breite BR von etwa 100 nm oder mehr. Bei ganz besonders bevorzugten Ausführungsformen weist das Spektrum S des ersten Lichts L1 eine Breite BR zwischen etwa 200 nm und etwa 400 nm oder mehr auf. Dadurch ist vorteilhaft sichergestellt, dass Spektralanteile des ersten Lichts L1 sowohl unterhalb als auch oberhalb des die Flanke enthaltenden Wellenlängenbereichs B3 liegen, wodurch eine sichere Detektion der Sicherheitsfarbe gewährleistet ist. Bei weiteren bevorzugten Ausführungsformen ist eine mittlere Wellenlänge des Spektrums S des ersten Lichts L1 so auf die Spektralcharakteristik SC der Sicherheitsfarbe abgestimmt, dass die mittlere Wellenlänge des Spektrums S in etwa im Bereich der Flanke F liegt. Weiter bevorzugt beträgt ein Betrag einer Differenz aus der mittleren Wellenlänge des Spektrums S und einer mittleren Wellenlänge der Flanke F weniger als etwa 100 nm, insbesondere weniger als etwa 20 nm.

Bei der erfindungsgemäßen Ausführungsform sind die Filtercharakteristiken der optischen Filter F1, F2 dementsprechend so an das erste Licht L1 angepasst, dass eine zentrale Wellenlänge des Durchlassbereichs wenigstens eines optischen Filters F1 unterhalb der Flanke F und eine zentrale Wellenlänge des Durchlassbereichs wenigstens eines weiteren optischen Filters F4 oberhalb der Flanke F der Spektralcharakteristik SC der Sicherheitsfarbe liegt.

Bei einer weiteren Ausführungsform, bei der insgesamt vier optische Filter vorgesehen sind, vergleiche Figur 2, können deren Durchlassbereiche vorteilhaft so festgelegt sein, dass die Durchlassbereiche von zwei Filtern im Wesentlichen unterhalb der Flanke F liegen, und die Durchlassbereiche der weiteren zwei Filter im Wesentlichen oberhalb der Flanke F liegen.

Die vorstehend genannte Beleuchtung des Objekts 200 mit dem ersten Licht L1 kann beispielsweise durch eine optionale Lichtquelle L, vgl. Figur 1, erfolgen. Alternativ oder ergänzend kann es sich hierbei auch um Umgebungslicht (beispielsweise Tageslicht oder Licht aus der Umgebung der Vorrichtung 1000) handeln.

Besonders bevorzugt handelt es sich bei dem ersten Licht L1 einer Ausführungsform zufolge um diffuses Licht mit im Wesentlichen konstanter Intensität im Bereich des Objekts 200.

Das erste Licht L1 wird wie aus Figur 1 ersichtlich auf das Objekt 200 eingestrahlt, und ein Teil des ersten Lichts L1 wird als zweites Licht L2 an dem Objekt 200 bzw. der gegebenenfalls darauf vorhandenen Sicherheitsfarbe 300 reflektiert. Die Intensität der hierbei erhaltenen spektralen Anteile des zweiten Lichts L2 hängt dabei unter anderem von der Spektralcharakteristik SC der Sicherheitsfarbe 300 ab.

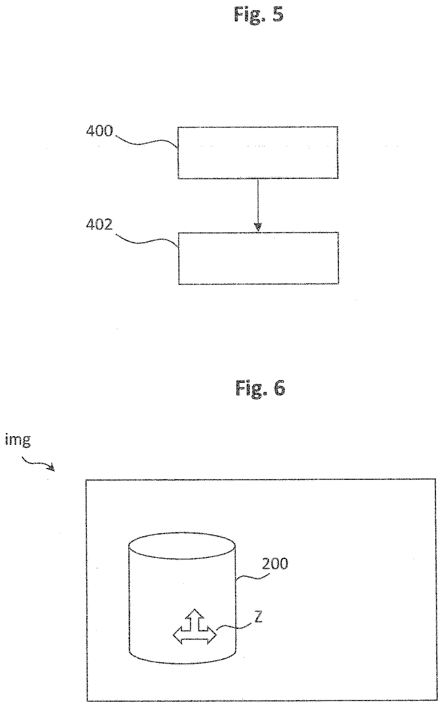

Erfindungsgemäß ist die Vorrichtung 1000 (Figur 1) dazu ausgebildet, mittels des Bildsensors 102 wenigstens ein Originalbild img (Fig. 6) des Objekts 200 aufzunehmen. Das Originalbild img wird aufgrund der Filtereinrichtung 104 hierbei primär in Abhängigkeit von solchen Spektralanteilen des Spektrums S (Fig. 2) des ersten Lichts L1 (Fig. 1) erhalten, welche durch die Filtereinrichtung 104 mit ihren vorliegend beispielhaft vier verschiedenen Filterkurven F1, F2, F3, F4 hindurch auf den optischen Bildsensor 102 (Fig. 1) dringen. Dadurch enthält das Originalbild img in Form entsprechender Intensitätswerte Informationen über die Intensität derjenigen Spektralanteile des Spektrums S, die den Durchlassbereichen der vier Filterkurven F1 bis F4 zugeordnet sind. Hiermit kann durch eine Auswertung des Originalbilds unter Kenntnis der Spektralcharakteristik SC der Sicherheitsfarbe 300 vorteilhaft ermittelt werden, ob die Farbe 300 mit ihrer charakteristischen Flanke F der Spektralcharakteristik SC in dem Übergangsbereich B3 (Figur 2) auf der Oberfläche des Objekts 200 tatsächlich vorhanden ist, oder nicht. Die Spektralcharakteristik SC der Sicherheitsfarbe 300 oder sie charakterisierende Informationen kann bzw. können für diesen Zweck vorteilhaft z.B. in dem Sensormodul 100 oder einem Speicher der Vorrichtung 1000 hinterlegt sein.

Beispielsweise kann bei einer bevorzugten Ausführungsform durch die erfindungsgemäße Vorrichtung 1000 ein Übereinstimmungsgrad von in dem reflektierten zweiten Licht L2 enthaltenen spektralen Anteilen mit der Sicherheitsfarbe 300 in Abhängigkeit des wenigstens einen Originalbilds img ermittelt werden.

Alternativ oder ergänzend kann die Vorrichtung 1000 dazu ausgebildet sein, wenigstens ein Sicherheitszeichen Z, vgl. Figur 6, in dem Originalbild img aufzufinden. Beispielsweise kann eine vorgebbare geometrische Form als Vorgabewert in der Vorrichtung 1000 gespeichert sein, und die Vorrichtung 1000 kann dazu ausgebildet sein, das Vorhandensein der Form in wenigstens einem Originalbild img zu erkennen. Sofern beispielsweise in einem Originalbild die Form erkannt wird, kann vorteilhaft zusätzlich geprüft werden, ob diejenigen Anteile des Originalbilds, welche mit der Form korrespondieren, Merkmale der Sicherheitsfarbe 300 bzw. eine spektrale Übereinstimmung hiermit aufweisen. Sofern dies der Fall ist, kann mit großer Wahrscheinlichkeit auf das Vorhandensein eines echten Sicherheitsmerkmals auf dem Objekt 200 geschlossen werden. Sofern beispielsweise nur die betreffende Form erkannt worden ist, die spektralen Merkmale der Sicherheitsfarbe jedoch nicht bestätigt werden konnten, handelt es sich bei der Form gegebenenfalls nicht um ein authentisches Sicherheitsmerkmal.

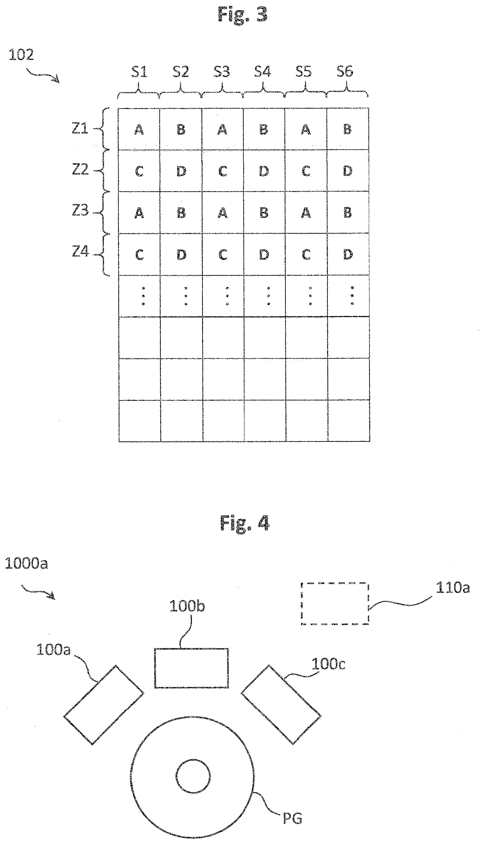

Figur 3 zeigt schematisch einen Bildsensor 102 mit Filtereinrichtung gemäß einer Ausführungsform. Der Bildsensor 102 weist eine matrixförmige Anordnung von Bildelementen ("pixel") auf, die in Reihen bzw. Zeilen Z1, Z2, Z3, Z4, ... und Spalten S1, S2, S3, S4, S5, S6 angeordnet sind. Analog zu der Ausführungsform gemäß Figur 2 weist auch der Bildsensor 102 gemäß Figur 3 eine optische Filtereinrichtung 104 auf, die insgesamt die Filterkurven von vier bevorzugt schmalbandigen optischen Filtern realisiert. Dies ist in Figur 3 schematisch mit den Buchstaben A, B, C, D angedeutet. D.h., das Bildelement in Spalte S2 und Zeile 21 weist den optischen Filter "B" auf, der beispielsweise die Filterkurve F2 gemäß Fig. 2 besitzt.

Wie sich aus Figur 3 ergibt, sind in einer ersten Zeile Z1 von Bildelementen in aufeinanderfolgenden Spalten S1, S2, ..., S6 ein erster optischer Filter A und ein zweiter optischer Filter B alternierend den Bildelementen der ersten Zeile 21 angeordnet, und in der zweiten Zeile Z2 (wiederum in aufeinanderfolgenden Spalten S1, S2, ..., S6) sind ein dritter optischer Filter C und ein vierter optischer Filter D alternierend den Bildelementen der zweiten Zeile Z2 angeordnet. Wie aus Figur 3 ebenfalls ersichtlich ist, wiederholt sich das Muster in den weiteren Zeilen Z3, Z4, und so fort. Dadurch ist vorteilhaft eine gleichmäßige Verteilung der insgesamt vier optischen Filter A, B, C, D auf der gesamten Oberfläche bzw. allen Bildelementen des Bildsensors 102 gegeben.

Beispielhaft weist der erste optische Filter A die erste Filtercharakteristik F1 gemäß Figur 2 auf, beispielhaft weist der zweite optische Filter B die zweite Filtercharakteristik F2 gemäß Figur 2 auf, beispielhaft weist der dritte optische Filter C die dritte Filtercharakteristik F3 gemäß Figur 2 auf, und beispielhaft weist der vierte optische Filter D die vierte Filtercharakteristik F4 gemäß Figur 2 auf.

Beispielsweise können vier zueinander benachbarte Bildelemente des Bildsensors 102, z.B. in den Spalten S1, S2 und den Zeilen Z1, Z2, auch als ein einziges übergeordnetes Bildelement ("Superpixel") mit vier "Subpixeln" aufgefasst werden, von denen jeder Subpixel einen dem Filtertyp A, B, C, D entsprechenden Farb- bzw. Spektralanteil repräsentiert. Ein weiterer Superpixel ist durch die vier weiteren zueinander benachbarten Bildelemente des Bildsensors 102 in den Spalten S3, S4 und den Zeilen Z1, Z2 gebildet, usw.

Bei einer besonders bevorzugten Ausführungsform sind die optischen Filter F1, F2, F3, F4 als schmalbandige Filter ausgebildet. Beispielsweise können die schmalbandigen Filter jeweils einen Durchlassbereich von einigen Nanometern aufweisen, insbesondere zwischen etwa 1 nm und etwa 10 nm. Eine zentrale Wellenlänge λ1, λ2, λ3, λ4 des jeweiligen Durchlassbereichs des betreffenden Filters wird weiteren Ausführungsformen zufolge vorteilhaft in Abhängigkeit der Spektralcharakteristik SC der zu überprüfenden Sicherheitsfarbe 300 gewählt. Beispielhafte Werte für die zentrale Wellenlänge eines Durchlassbereichs liegen zwischen etwa 400 nm und etwa 900 nm, können bei manchen Ausführungsformen aber auch außerhalb dieses Intervalls liegen.

Bei weiteren vorteilhaften Ausführungsformen kann wenigstens ein optisches Filter auch einen Durchlassbereich von etwa 10 nm bis einige 10 nm, z.B. ca. 50 nm oder mehr, aufweisen.

Ferner sind manche Ausführungsformen vorstellbar, bei denen alle Filter der optischen Filtereinrichtung 104 im Wesentlichen einen vergleichbar breiten Durchlassbereich (von z.B. jeweils ca. 10 nm) aufweisen. Bei weiteren Ausführungsformen können unterschiedliche Filter der optischen Filtereinrichtung 104 auch unterschiedlich große bzw. breite Durchlassbereiche aufweisen.

Sofern bei weiteren Ausführungsformen weniger als vier Filter bzw. mehr als vier Filter einem Bildsensor 102 zugeordnet sind, können diese ebenfalls bevorzugt gleichmäßig über die gesamte Oberfläche bzw. die Gesamtanzahl der Bildelemente des betreffenden Bildsensors verteilt sein, analog zu dem in Figur 3 beispielhaft für insgesamt vier Filter gezeigten Schema.

Bei einer weiteren vorteilhaften Ausführungsform ist eine Steuereinrichtung 110 (Figur 1) vorgesehen, welche beispielsweise einen Betrieb des Sensormoduls 100 und/oder einen Betrieb der Lichtquelle L steuert.

Die Steuereinrichtung 110 kann beispielsweise auch dazu ausgebildet sein, wenigstens einen Strichcode und/oder sonstige eindimensionale und/oder mehrdimensionalen Codes wie beispielsweise QR-Codes in dem durch das Sensormodul 100 aufgenommenen Originalbild img (Fig. 6) bzw. den Originalbildern zu erkennen.

Bei weiteren Ausführungsformen kann die Steuereinrichtung 110 auch dazu ausgebildet sein, eine Bewegungserkennung beziehungsweise eine Analyse einer Bewegung wenigstens eines Objekts in Abhängigkeit mehrerer Originalbilder auszuführen.

Bei weiteren Ausführungsformen kann vorgesehen sein, dass die Steuereinrichtung 110 dazu ausgebildet ist, mit einer externen Einheit 2000 (Fig. 1) zu kommunizieren. Beispielsweise kann es sich bei der externen Einheit 2000 um eine Steuerung eines Automaten handeln, der die Rücknahme von Wertstoffobjekten in Abhängigkeit der erfindungsgemäßen Erkennung einer Sicherheitsfarbe ausführt ("Pfandgutrücknahmeautomat").

Bei weiteren Ausführungsformen kann vorgesehen sein, dass die Steuereinrichtung 110 dazu ausgebildet ist, einen derartigen Automaten 2000 (direkt) zu steuern. Bei weiteren bevorzugten Ausführungsformen kann die erfindungsgemäße Vorrichtung 1000 gemäß Figur 1 beispielsweise auch direkt in einen derartigen Automaten 2000 integriert sein.

Figur 4 zeigt schematisch ein Blockdiagramm einer weiteren Ausführungsform 1000a erfindungsgemäßen Vorrichtung. Die Vorrichtung 1000a verfügt vorliegend über 3 Sensormodule 100a, 100b, 100c, von denen jedes beispielsweise die vorstehend unter Bezugnahme auf die Figuren 1 bis 3 beschriebene Struktur 100 bzw. Funktionalität aufweist. Durch die Vorrichtung 1000a können somit beispielsweise gleichzeitig 3 Originalbilder aus unterschiedlichen Perspektiven in Bezug auf ein zu analysierendes Objekt, vorliegend einen Pfandgutgegenstand PG, aufgenommen werden. Eine Steuerung des Betriebs der drei Sensormodule 100a, 100b, 100c kann vorliegend beispielsweise durch die Steuereinrichtung 110a erfolgen.

Besonders vorteilhaft ist in die jeweiligen Sensormodule 100a, 100b, 100c einer weiteren Ausführungsform zufolge bereits eine lokale Auswerteeinrichtung (nicht gezeigt) integriert, die das Aufnehmen von Originalbildern und das vorstehend unter Bezugnahme auf die Figuren 1 bis 3 beschriebene Verfahren zur Auswertung der Originalbilder zumindest teilweise, vorzugsweise jedoch überwiegend oder vollständig, implementiert. Dadurch kann die Steuereinrichtung 110a mit vergleichsweise geringem Aufwand betreffend Rechenleistung und Speicher vorteilhaft eine Vielzahl von Sensormodulen 100a, 100b, 100c steuern.

Alternativ zu der in Figur 4 abgebildeten Konfiguration können auch mehr oder weniger Sensormodule vorhanden sein, deren Betrieb ebenfalls durch die Steuereinrichtung 110a steuerbar ist. Dadurch können beispielsweise vorteilhaft sogenannte Ringscanner bereitgestellt werden, die ein zu analysierendes Objekt PG, insbesondere gleichzeitig, aus verschiedenen Perspektiven durch Aufnahme entsprechender Originalbilder und deren Auswertung analysieren können. Beispielsweise ist auch denkbar, die Konfiguration 1000a gemäß Figur 4 durch mindestens drei weitere Sensormodule derart zu ergänzen, dass, bevorzugt gleichzeitig, Originalbilder von z.B. sechs Seiten einer Mantelfläche des Wertstoffobjekts PG erhalten werden können, und somit eine besonders schnelle Prüfung auf das Vorhandensein der Sicherheitsfarbe auf dem Objekt PG durchführbar ist.

Bei einer weiteren vorteilhaften Ausführungsform ist vorgesehen, dass ein optisches Sensormodul bereitgestellt wird, welches mehrere Bildsensoren aufweist, wobei jedem Bildsensor eine Filtereinrichtung zugeordnet ist, die eine vorgebbare Filterkurve realisiert. Beispielsweise kann eine einem ersten Bildsensor zugeordnete erste Filtereinrichtung eine erste Filterkurve F1, vgl. Fig. 2, realisieren, eine einem zweiten Bildsensor zugeordnete zweite Filtereinrichtung eine zweite Filterkurve F2, usw. Bevorzugt wird eine zu untersuchende Szene wie z.B. die Umgebung des Objekts 200 durch eine gemeinsame Optik auf die mehreren Bildsensoren abgebildet. Alternativ oder ergänzend kann wenigstens eine einem der Bildsensoren zugeordnete Filtereinrichtung auch mehrere Filterkurven F1, F2 realisieren.

Das erfindungsgemäße Prinzip ermöglicht vorteilhaft eine zuverlässige Analyse auf das Vorhandensein einer Sicherheitsfarbe 300 (Fig. 1) auf einem Objekt 200 hin allein auf der Basis eines einzigen Originalbilds. Das erfindungsgemäße Prinzip ist weiter vorteilhaft im Wesentlichen unabhängig von Umgebungslicht bzw. kann bei geeigneter Anpassung der Sicherheitsfarbe an das Spektrum des Umgebungslichts sogar direkt das Umgebungslicht zur Beleuchtung des zu prüfenden Objekts 200 nutzen.

Figur 5 zeigt schematisch ein vereinfachtes Flussdiagramm einer Ausführungsform des erfindungsgemäßen Verfahrens. In Schritt 400 wird ein Originalbild img (Fig. 6) des Objekts 200 (Fig. 1) mittels des Sensormoduls 100 aufgenommen, und in Schritt 402 (Fig. 5) wird das Originalbild img ausgewertet, um auf das Vorhandensein einer Sicherheitsfarbe 300 auf dem Objekt 200 zu schließen.

Figur 6 zeigt schematisch ein Originalbild img, wie es unter Anwendung des vorstehend beschriebenen erfindungsgemäßen Prinzips mittels des Sensormoduls 100 bzw. der Vorrichtung 1000 aufgenommen werden kann. Auf dem Originalbild img ist ein Objekt 200, beispielsweise ein Wertstoffobjekt wie z.B. eine Getränkeverpackung, abgebildet, das ein Sicherheitszeichen 2 aufweist. Weiter erfindungsgemäß kann unter Ausnutzung der wie vorstehend unter Bezugnahme auf Figur 2 beschrieben gewonnenen spektrale Informationen des Originalbilds img vorteilhaft festgestellt werden, ob das Sicherheitszeichen 2 mit einer vorgebbaren Sicherheitsfarbe 300 (Fig. 1), die eine spezifische Spektralcharakteristik SC (Fig. 2) aufweist, erstellt worden ist.

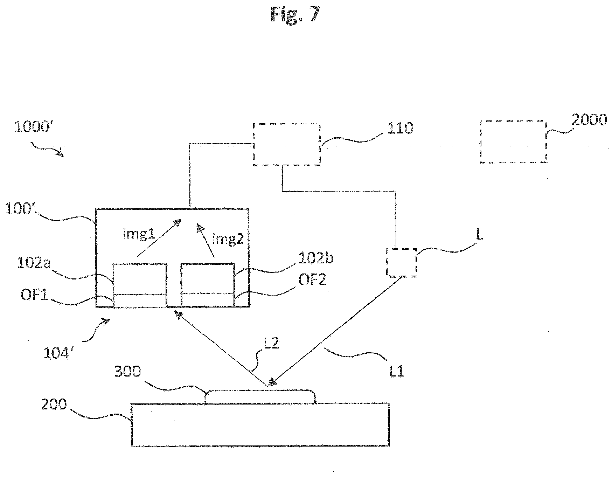

Bei einer weiteren besonders bevorzugten Ausführungsform 1000', die schematisch in Figur 7 gezeigt ist, ist wenigstens ein erster Bildsensor 102a und ein zweiter Bildsensor 102b, z.B. zwei CCD- oder CMOS-Bildsensorchips, vorgesehen, die vorliegend beide in dem(selben) optischen Sensormodul 100' angeordnet sind, und daher auch eine ggf. vorhandene gemeinsame Optik, z.B. ein Objektiv (nicht gezeigt), nutzen können. Ein solches Objektiv kann beispielsweise auch bei den vorstehend beschriebenen Ausführungsformen vorhanden sein.

Die optische Filtereinrichtung 104' weist vorliegend wenigstens einen ersten dem ersten Bildsensor 102a zugeordneten optischen Filter OF1 und wenigstens einen zweiten dem zweiten Bildsensor 102b zugeordneten optischen Filter OF2 auf. Die Vorrichtung 1000` ist dazu ausgebildet, mittels des ersten Bildsensors 120a wenigstens ein erstes Originalbild img1 und mittels des zweiten Bildsensors 102b wenigstens ein zweites Originalbild img2 des Objekts 200 aufzunehmen und in Abhängigkeit des wenigstens einen ersten und des wenigstens einen zweiten Originalbilds img1, img2 des Objekts 200 auf das Vorhandensein der Farbe 300, insbesondere der Sicherheitsfarbe, auf dem Objekt 200 zu schließen. Die weiteren Komponenten 110, 2000, L können beispielsweise i.w. den vorstehend unter Bezugnahme auf Fig. 1 beschriebenen Varianten entsprechen.

Bei einer weiteren bevorzugten Ausführungsform ist der erste optische Filter OF1 vorzugsweise flächig, also insbesondere gleichmäßig über allen Bildelementen, des ersten Bildsensors 102a und der zweite optische Filter OF2 vorzugsweise flächig, also insbesondere gleichmäßig über allen Bildelementen, des zweiten Bildsensors 102b angeordnet bzw. aufgebracht, z.B. in Form einer jeweiligen Beschichtung. Damit kann der erste Bildsensor 102a gleichsam eine erste spektrale Abtastung vornehmen, die dem ersten optischen Filter OF1 bzw. seinem Durchlassbereich, entspricht, und es kann der zweite Bildsensor 102b gleichsam eine zweite spektrale Abtastung vornehmen, die dem zweiten optischen Filter OF2 bzw. seinem Durchlassbereich, entspricht. Bevorzugt sind die Durchlassbereiche der Filter OF1, OF2 wiederum so angeordnet, dass die Flanke F (Fig. 2) der Spektralcharakteristik SC der zu erkennenden (Sicherheits-)Farbe 300 zwischen ihnen liegt.

Beispielsweise kann der erste optische Filter OF1 eine zu der ersten Filtercharakteristik F1 gemäß Figur 2 und der zweite optische Filter OF2 eine zu der vierten Filtercharakteristik F4 gemäß Figur 2 entsprechende Charakteristik aufweisen.

Alternativ oder ergänzend kann ein entsprechender Filter OF1, OF2 auf bzw. vor dem jeweiligen Bildsensor 102a, 102b angeordnet sein. Der Filter kann beispielsweise wenigstens ein Filterglas aufweisen. Generell kann bei weiteren Ausführungsformen ein entsprechender Filter OF1, OF2 auch an einem anderen Ort in dem Strahlengang zwischen Objekt 200 und Bildsensor 102a, 102b angeordnet sein, z.B. zwischen einem optional vorhandenen Objektiv und dem Bildsensor 102a, 102b oder zwischen Objekt 200 und dem optionalen Objektiv, also z.B. vor bzw. auf dem Objektiv.

Bei weiteren Ausführungsformen können auch mehr als zwei Bildsensoren 102a, 102b vorgesehen bzw. in dem(selben) optischen Sensormodul 100' angeordnet sein, denen bevorzugt jeweils mindestens ein optischer Filter zugeordnet ist, z.B. insgesamt drei Bildsensoren. Mehr als drei Bildsensoren sind bei weiteren Ausführungsformen ebenfalls denkbar.

Bei weiteren Ausführungsformen kann z.B. auch der erste optische Filter OF1 aus Fig. 7 gleichmäßig allen Bildelementen des ersten Bildsensors 102a zugeordnet sein, wohingegen wenigstens ein weiterer optischer Bildsensor der Vorrichtung 1000' mehrere optische Filter aufweist, die z.B. gleichmäßig jeweils unterschiedlichen Bildelementen des weiteren Bildsensors zugeordnet sind, z.B. gemäß dem Schema nach Fig. 3. In diesem Fall kann durch den ersten Bildsensor bei vergleichsweise großer Ortsauflösung ein erster spektraler Abtastwert erhalten werden, und es kann durch den zweiten Bildsensor bei vergleichsweise kleinerer Ortsauflösung eine Mehrzahl weiterer spektraler Abtastwerte (entsprechend den dem zweiten Bildsensor zugeordneten optischen Filter) erhalten werden.

Bei weiteren vorteilhaften Ausführungsformen kann die Vorrichtung 1000' gemäß Fig. 7 mit einer oder mehreren der vorstehend unter Bezugnahme auf die Fig. 1 bis 6 beschriebenen Ausführungsformen kombiniert werden.

Besonders vorteilhaft kann bei weiteren Ausführungsformen auch die Vorrichtung 1000' zum Aufbau eines "Ringscanners" (vgl. mehrere Sensormodule 100a, 100b, 100c aus Fig. 4, genutzt werden.

Das vorstehend beschriebene erfindungsgemäße Prinzip weist den bedeutenden Vorteil auf, dass eine Sicherheit bezüglich der Erkennung der Sicherheitsfarbe unabhängig von gegebenenfalls auftretenden Fertigungstoleranzen der Lichtquelle L bzw. unempfindlich gegenüber spektralen Schwankungen des ersten Lichts L1 ist. Bei konventionellen Systemen, welche z.B. zwei verschiedenfarbige Leuchtdioden zur wechselweisen Beleuchtung eines Objekts mit Licht unterschiedlicher Farbe und Graustufenbilder zur Auswertung verwenden, müssen die Leuchtdioden sehr schmalbandig und mit möglichst großer Präzision hinsichtlich ihrer Zentralwellenlänge gefertigt werden, was entsprechend hohe Kosten bedingt. Dieser Nachteil wird durch das erfindungsgemäße Prinzip, das auf der Verwendung einer breitbandigen Beleuchtung mit erstem Licht L1 basiert, vermieden. Weiter vorteilhaft können auf der Basis eines einzigen Originalbilds img so viele Spektral-Abtastpunkte ermittelt werden, wie unterschiedliche optische Filter bzw. verschiedene Filterkurven F1, F2, F3, F4, realisiert durch die optische Filtereinrichtung 104, vorgesehen sind. Beispielsweise können bei der Konfiguration gemäß Figur 2 vorteilhaft unter Verwendung eines einzigen Originalbilds img vier spektrale Abtastwerte im Bereich der Wellenlängen λ1, λ2, λ3, λ4 erhalten werden. Dadurch kann beispielsweise die Sicherheitsfarbe 300 (Figur 1) zuverlässig analysiert bzw. ihr Vorhandensein festgestellt werden.

Generell kann das erfindungsgemäße Prinzip auch dazu verwendet werden, eine Echtheitsprüfung von (Sicherheits-)Druckfarben oder sonstigen Farben auszuführen, sofern die Filterkurven der Filtereinrichtung 104 auf die spektrale Charakteristik der jeweiligen Druckfarbe abgestimmt sind.

Bei einer bevorzugten Ausführungsform ist das Sensormodul 100, 100' dazu ausgebildet, wenigstens ein Originalbild einer Bildverarbeitung zu unterziehen bzw. das wenigstens eine Originalbild an eine externe Einheit wie beispielsweise die Steuereinrichtung 110 zu übertragen.

Bei einer Ausführungsform kann ein solches Originalbild von dem Sensormodul 100 oder der Steuereinrichtung 110 oder einer anderen Einheit dazu verwendet werden, das Vorhandensein eines eindimensionalen Codes (zum Beispiel Barcode) oder zweidimensionalen Codes (zum Beispiel QR-Code) auf dem Objekt 200 zu ermitteln und diesen Code beispielsweise zu decodieren.

Alternativ oder ergänzend kann das Originalbild weiteren Ausführungsformen zufolge dazu verwendet werden, eine Form des Objekts 200 zu erkennen und gegebenenfalls das Objekt danach zu klassifizieren, und/oder dazu, eine Position des Objekts zu ermitteln.

Bei einer weiteren bevorzugten Ausführungsform kann vorgesehen sein, dass die Vorrichtung 1000 bzw. ihr Sensormodul 100 und/oder die Steuereinrichtung 110 das Originalbild auf das Vorhandensein einer Sicherheitsfarbe hin analysiert, und ein mit dem Originalbild korrespondierendes (weiteres) Digitalbild als Ergebnis bzw. Zwischenergebnis bereitstellt. Bei dem korrespondierenden Digitalbild kann beispielsweise vorgesehen sein, dass solche Bildelemente (Pixel) hohe Intensitätswerte aufweisen, bei denen aus der erfindungsgemäßen Auswertung der spektralen Abtastwerte in Abhängigkeit des Originalbilds darauf geschlossen wurde, dass die Sicherheitsfarbe im Bereich des betreffenden Bildelements des Originalbilds vorhanden ist. Insbesondere kann ein entsprechender Intensitätswert des korrespondierenden Digitalbilds in Abhängigkeit eines Übereinstimmungsgrads gewählt werden, der den Grad der Übereinstimmung der auf dem Originalbild vorhandenen Farbe bzw. spektralen Information mit den Charakteristika der Sicherheitsfarbe angibt. Je heller beispielsweise ein Pixel auf dem korrespondierenden Digitalbild ist, umso größer ist der Übereinstimmungsgrad mit der zu prüfenden Sicherheitsfarbe.

Bei einer weiteren vorteilhaften Ausführungsform kann das Sensormodul 100 bzw. die Steuereinrichtung 110 eine Recheneinheit enthalten, beispielsweise einen Mikrocontroller und/oder digitalen Signalprozessor bzw. eine programmierbare Logikschaltung (beispielsweise einen FPGA), die beispielsweise zur Ausführung von einzelnen Aspekten des erfindungsgemäßen Verfahrens hergerichtet ist.

Bei einer weiteren vorteilhaften Ausführungsform kann die Vorrichtung 1000 oder wenigstens eine ihrer Komponenten eine Datenschnittstelle für die Übertragung von Originalbildern img bzw. verarbeiteten Digitalbildern bzw. sonstiger Daten wie beispielsweise Ausgangsdaten (beispielsweise eine logische Information "wahr"/"falsch", die die Echtheit der aktuell analysierten Sicherheitsfarbe 300 angibt) aufweisen. Die Schnittstelle kann bei einer Ausführungsform beispielsweise als USB-Schnittstelle ausgeführt sein. Alternativ oder ergänzend kann eine Netzwerkschnittstelle wie beispielsweise eine Ethernet-Schnittstelle vorhanden sein.

Bei einer weiteren vorteilhaften Ausführungsform ist vorgesehen, dass die Vorrichtung 1000, 1000` dazu ausgebildet ist, wenigstens ein mittels des Bildsensors 102 (bzw. 102a, 102b) aufgenommenes Originalbild bereitzustellen. Bei einer weiteren Ausführungsform ist die Vorrichtung 1000, 1000` dazu ausgebildet, die Position und/oder Größe eines unter Verwendung der Sicherheitsfarbe auf das Objekt 200 aufgebrachten Sicherheitsmerkmals 2 bereitzustellen und gegebenenfalls an eine externe Einheit, wie beispielsweise eine Steuerungseinrichtung für einen Pfandgutrücknahmeautomaten, auszugeben. Alternativ oder ergänzend kann ein den Übereinstimmungsgrad des Sicherheitsmerkmals mit wenigstens einem vorgebbaren Sicherheitsmerkmal angebendes Qualitätsmaß an die externe Einheit ausgegeben werden.

Optional kann auch ein innerhalb des Sensormoduls 100, 100' im Rahmen der vorstehend beschriebenen Auswertung verarbeitetes Digitalbild an die externe Einheit ausgegeben werden, also beispielsweise ein mit dem Originalbild korrespondierendes Digitalbild, welches Intensitätswerte der einzelnen Bildelemente aufweist, die einen Übereinstimmungsgrad der spektralen Informationen des Originalbilds mit der Sicherheitsfarbe charakterisieren. Bei weiteren Ausführungsformen ist denkbar, dass auch nur ein vorgebbarer Ausschnitt eines solchen verarbeiteten Digitalbilds an die externe Einheit ausgegeben wird.

Besonders bevorzugt sind weiteren Ausführungsformen zufolge alle für die Erkennung der Sicherheitsfarbe 300 wichtigen Informationen ausschließlich innerhalb der Vorrichtung 1000, 1000`, insbesondere innerhalb des Sensormoduls 100, 100' und/oder der Steuereinrichtung 110 abgespeichert. Optional können diese Informationen durch geeignete Maßnahmen gegen ein unbefugtes Auslesen durch Dritte geschützt werden.

Weiteren bevorzugten Ausführungsformen zufolge kann die erfindungsgemäße Vorrichtung 1000, 1000` vorteilhaft als zentrale Baugruppe zur Erkennung von Sicherheitsfarben verwendet und beispielsweise in Pfandgutrücknahmeautomaten integriert werden.

Nachstehend sind weitere vorteilhafte Aspekte der vorliegenden Erfindung angegeben, die einzeln oder in Kombination miteinander kombinierbar sind mit einzelnen oder mehreren der vorstehend beschriebenen Ausführungsformen.

Ein weiterer Aspekt der vorliegenden Erfindung umfasst ein Verfahren zur Ermittlung einer durch mindestens eine auf einem Objekt 200 (Figur 1) aufgebrachten Farbe 300 (insbesondere Sicherheitsfarbe) charakterisierten Information, insbesondere einer auf Pfandgut wie z.B. Flaschen angeordneten und/oder aufgedruckten Information, wobei ein erstes Licht L1 mittels mindestens einer Lichtquelle L ausgestrahlt wird, und wobei ein von dem Objekt 200 bzw. der (Sicherheits-)Farbe 300 reflektiertes zweites Licht L2 mittels mindestens eines Sensormoduls 100; 100a, 100b, 100c ermittelt wird, wobei eine spektrale Empfindlichkeit eines Bildsensors 102 (Fig. 1) des mindestens einen Sensormoduls derart schmalbandig vorgegeben ist, dass ein Vorhandensein bzw. NichtVorhandensein der mindestens einen Farbe 300 auf dem Objekt 200 durch das mindestens eine Sensormodul 100 ermittelt werden kann und/oder wobei zwischen mehreren verschiedenen Farben bzw. Spektralbereichen (z.B. entsprechend den Filterkurven F1, F2, F3, F4 gemäß Fig. 2) durch das mindestens eine Sensormodul 100 unterschieden werden kann. Insbesondere wird die durch die mindestens eine Farbe 300 charakterisierte Information unter Verwendung des mindestens einen Sensormoduls 100 ermittelt.

Bei einer weiteren vorteilhaften Ausführungsform ist vorgesehen, dass eine spektrale Bandbreite des ersten Lichts L1 mit einer spektralen Empfindlichkeit des mindestens einen Sensorelements 100 bzw. seines Bildsensors 102 zumindest teilweise überlappt.

Bei einer weiteren vorteilhaften Ausführungsform ist vorgesehen, dass mindestens zwei Sensormodule bzw. Bildsensoren verwendet werden, wobei die Ermittlung der durch die mindestens eine Farbe charakterisierten Information mittels der mindestens zwei Bildsensoren im Wesentlichen gleichzeitig erfolgt.

Bei einer weiteren vorteilhaften Ausführungsform ist vorgesehen, dass eine spektrale Bandbreite des ersten Lichts L1 zumindest in etwa gleich groß ist wie eine spektrale Empfindlichkeit des mindestens einen Bildsensors 102.

Bei einer weiteren vorteilhaften Ausführungsform ist vorgesehen, dass eine spektrale Bandbreite des ersten Lichts L1 kleiner ist als eine spektrale Empfindlichkeit des mindestens einen Bildsensors 102.

Bei einer weiteren vorteilhaften Ausführungsform ist vorgesehen, dass eine spektrale Bandbreite des ersten Lichts L1 und/oder eine spektrale Bandbreite des zweiten Lichts L2 zumindest teilweise das sichtbare Lichtspektrum und/oder zumindest teilweise das infrarote Lichtspektrum und/oder zumindest teilweise das ultraviolette Lichtspektrum umfasst.

Bei einer weiteren vorteilhaften Ausführungsform ist vorgesehen, dass mindestens ein Bildsensor 102 durch eine Matrix von Einzel-Sensoren charakterisiert ist, wobei die Einzel-Sensoren mindestens zwei verschiedene spektrale Empfindlichkeiten aufweisen, und wobei die Einzel-Sensoren nach einem regelmäßigen Schema angeordnet sind. Beispielsweise kann einer Ausführungsform zufolge die in Figur 3 abgebildete Konfiguration als eine Mehrzahl von matrixförmige in Zeilen und Spalten angeordneten Einzelsensoren aufgefasst werden, die aufgrund der ihnen jeweils zugeordneten optischen Filter unterschiedliche spektrale Empfindlichkeiten aufweisen, die aus den unterschiedlichen Durchlassbereichen der betreffenden Filter resultieren.

Bei einer weiteren vorteilhaften Ausführungsform ist vorgesehen, dass mindestens ein Bildsensor eine Bayer-Matrix umfasst.

Bei einer weiteren vorteilhaften Ausführungsform ist vorgesehen, dass das erste Licht L1 mehrere Einzelspektren bzw. Teilspektren aufweist.

Bei einer weiteren vorteilhaften Ausführungsform ist vorgesehen, dass mindestens ein Bildsensor 102 vier verschiedene Einzel-Sensoren umfasst, wobei die vier Einzel-Sensoren mittels eines schachbrettartigen Rasters gleichverteilt angeordnet sind.

Bei einer weiteren vorteilhaften Ausführungsform ist vorgesehen, dass die (optionale) Lichtquelle L wenigstens eine Halbleiterlichtquelle wie beispielsweise eine Leuchtdiode oder eine Laserdiode oder dergleichen aufweist. Alternativ oder ergänzend kann die optionale Lichtquelle L auch andere Typen von Lichtquellen aufweisen.

Bei einer weiteren vorteilhaften Ausführungsform kann vorgesehen sein, dass die Lichtquelle L selektiv ein vergleichsweise breitbandiges erstes Licht erzeugen kann und alternativ oder zusätzlich hierzu ein vergleichsweise schmalbandiges Licht, beispielsweise durch eine zusätzliche Leuchtdiode (z.B. LED im Rot- bzw. Infrarotbereich oder dergleichen).

## Patentansprüche

1. System umfassend eine Vorrichtung (1000) zur Erkennung einer Sicherheitsfarbe und Sicherheitsfarbe (300), wobei die Sicherheitsfarbe (300) eine Spektralcharakteristik (SC) mit einem ersten Wellenlängenbereich (B1) und einem zweiten Wellenlängenbereich (B2) und einem zwischen dem ersten Wellenlängenbereich (B1) und dem zweiten Wellenlängenbereich (B2) liegenden dritten Wellenlängenbereich (B3) aufweist, wobei die Spektralcharakteristik (SC) in dem dritten Wellenlängenbereich (B3) eine Flanke (F) aufweist, wobei die Vorrichtung (1000) wenigstens ein optisches Sensormodul (100; 100a, 100b, 100c) aufweist mit mindestens einem Bildsensor (102), einer dem Bildsensor (102) zugeordneten optischen Filtereinrichtung (104), die wenigstens zwei verschiedene Filterkurven (F1, F4) mit zugeordneten Durchlassbereichen realisiert, wobei die zugeordneten Durchlassbereiche der zwei verschiedenen Filterkurven (F1, F4) so gewählt sind, dass die Flanke (F) der Spektralcharakteristik (SC) der Sicherheitsfarbe (300) zwischen den beiden zugeordneten Durchlassbereichen liegt, wobei die Vorrichtung (1000) dazu ausgebildet ist, mittels des Bildsensors (102) wenigstens ein Originalbild (img) des Objekts (200) aufzunehmen und in Abhängigkeit des wenigstens einen Originalbilds des Objekts (200) basierend auf der Spektralcharakteristik (SC) der Sicherheitsfarbe (300) auf das Vorhandensein der Sicherheitsfarbe (300) auf dem Objekt (200) zu schließen.

2. System nach Anspruch 1, wobei die optische Filtereinrichtung (104) wenigstens einen ersten schmalbandigen optischen Filter aufweist.

3. System nach Anspruch 2, wobei die optische Filtereinrichtung (104) wenigstens zwei schmalbandige optische Filter aufweist.

4. System nach einem der Ansprüche 2 bis 3, wobei die optische Filtereinrichtung (104) vier schmalbandige optische Filter aufweist.

5. System nach einem der vorstehenden Ansprüche, wobei die optische Filtereinrichtung (104) auf dem Bildsensor (102) angeordnet, insbesondere auf einer optischen Oberfläche des Bildsensors (102) aufgebracht, ist.

6. System nach einem der vorstehenden Ansprüche, wobei die wenigstens zwei verschiedenen Filterkurven (F1, F4) und/oder wenigstens einer der schmalbandigen optischen Filter einen Durchlassbereich zwischen etwa 10 Nanometer, nm, und etwa 50 nm aufweist, insbesondere zwischen etwa 1 nm und etwa 10 nm.

7. System nach einem der vorstehenden Ansprüche, wobei die Vorrichtung (1000) eine Lichtquelle (L) zur Beleuchtung des Objekts (200) mit einem ersten Licht (L1) aufweist, wobei ein Spektrum (S) des ersten Lichts (L1) einen Wellenlängenbereich (B3) der Flanke (F) der Spektralcharakteristik (SC) der Sicherheitsfarbe (300) aufweist.

8. System nach wenigstens einem der Ansprüche 2 bis 7, wobei wenigstens einer der schmalbandigen optischen Filter, vorzugsweise jedoch alle der schmalbandigen optischen Filter, gleichmäßig über den Bildelementen des Bildsensors (102) verteilt ist bzw. sind.

9. System nach wenigstens einem der vorstehenden Ansprüche, wobei der mindestens eine Bildsensor (102) eine matrixförmige Anordnung von Bildelementen aufweist, die in Reihen und Spalten angeordnet sind, wobei die optische Filtereinrichtung (104) vier schmalbandige optische Filter (A, B, C, D) mit jeweils unterschiedlichem Durchlassbereich aufweist, wobei insbesondere in einer ersten Zeile (Z1) von Bildelementen in aufeinanderfolgenden Spalten von Bildelementen ein erster optischer Filter (A) und ein zweiter optischer Filter (B) der vier schmalbandigen optischen Filter (A, B, C, D), insbesondere alternierend, angeordnet sind, wobei insbesondere in einer auf die erste Zeile (Z1) folgenden zweiten Zeile (Z2) von Bildelementen in aufeinanderfolgenden Spalten der Bildelemente ein dritter optischer Filter (C) und ein vierter optischer Filter (D) der vier schmalbandigen optischen Filter (A, B, C, D), insbesondere alternierend, angeordnet sind, und wobei insbesondere sich eine Verteilung der vier schmalbandigen optischen Filter (A, B, C, D) für die weiteren Zeilen (Z3, Z4, ...) von Bildelementen des Bildsensors (102) gemäß der ersten Zeile (Z1) und der zweiten Zeile (Z2) wiederholt.

10. System nach wenigstens einem der vorstehenden Ansprüche, wobei eine Steuereinrichtung (110) vorgesehen ist, die zur Steuerung eines Betriebs des Sensormoduls (100) und/oder zur Steuerung eines Betriebs der Lichtquelle (L) ausgebildet ist, wobei insbesondere die Steuereinrichtung (110) zur Ausführung wenigstens eines der nachfolgenden Verfahren ausgebildet ist: - Erkennen wenigstens eines Strichcodes und/oder sonstigen eindimensionalen oder mehrdimensionalen Codes auf dem Originalbild, Analyse einer Bewegung wenigstens eines Objekts, Kommunikation mit einer externen Einheit (2000), Steuerung einer externen Einheit (2000), Auslesen von Daten des Bildsensors (102).

11. System nach wenigstens einem der vorstehenden Ansprüche, wobei der mindestens eine Bildsensor (102) ein CMOS- oder CCD-Sensor oder Super-CCD-Sensor ist.

12. System nach wenigstens einem der vorstehenden Ansprüche, wobei die Vorrichtung (1000) dazu ausgebildet ist, eine spektrale Zusammensetzung wenigstens eines Bildbereichs des Originalbilds auf einen Übereinstimmungsgrad mit der Sicherheitsfarbe hin zu überprüfen.

13. System nach wenigstens einem der vorstehenden Ansprüche, wobei die Vorrichtung (1000) dazu ausgebildet ist, wenigstens ein Sicherheitszeichen in dem Originalbild aufzufinden.

14. System nach wenigstens einem der vorstehenden Ansprüche, wobei wenigstens ein erster Bildsensor (102a) und ein zweiter Bildsensor (102b) vorgesehen sind, wobei die optische Filtereinrichtung (104`) wenigstens einen ersten dem ersten Bildsensor (102a) zugeordneten optischen Filter (OF1) und wenigstens einen zweiten dem zweiten Bildsensor (102b) zugeordneten optischen Filter (OF2) aufweist, wobei die Vorrichtung (1000`) dazu ausgebildet ist, mittels des ersten Bildsensors (102a) wenigstens ein erstes Originalbild (img1) und mittels des zweiten Bildsensors (102b) wenigstens ein zweites Originalbild (img2) des Objekts (200) aufzunehmen und in Abhängigkeit des wenigstens einen ersten und des wenigstens einen zweiten Originalbilds (img1, img2) des Objekts (200) auf das Vorhandensein der Farbe, insbesondere der Sicherheitsfarbe (300), auf dem Objekt (200) zu schließen.

15. Verwendung eines Systems nach einem der Ansprüche 1 bis 14 zur Erkennung einer Sicherheitsfarbe (300), wobei die Sicherheitsfarbe (300) eine Spektralcharakteristik (SC) mit einem ersten Wellenlängenbereich (B1) und einem zweiten Wellenlängenbereich (B2) und einem zwischen dem ersten Wellenlängenbereich (B1) und dem zweiten Wellenlängenbereich (B2) liegenden dritten Wellenlängenbereich (B3) aufweist, wobei die Spektralcharakteristik (SC) in dem dritten Wellenlängenbereich (B3) eine Flanke (F) aufweist, wobei die Vorrichtung (1000) ein optisches Sensormodul (100; 100a, 100b, 100c) aufweist mit mindestens einem Bildsensor (102), einer dem Bildsensor zugeordneten optischen Filtereinrichtung (104), die wenigstens zwei verschiedene Filterkurven (F1, F4) mit zugeordneten Durchlassbereichen realisiert, wobei die zugeordneten Durchlassbereiche der zwei verschiedenen Filterkurven (F1, F4) so gewählt sind, dass die Flanke (F) der Spektralcharakteristik (SC) der Sicherheitsfarbe zwischen den beiden zugeordneten Durchlassbereichen liegt, wobei die Vorrichtung (1000) mittels des Bildsensors (102) wenigstens ein Originalbild (img) eines Objekts (200) aufnimmt (400) und in Abhängigkeit des wenigstens einen Originalbilds (img) des Objekts (200) basierend auf der Spektralcharakteristik (SC) der Sicherheitsfarbe (300) auf das Vorhandensein der Sicherheitsfarbe (300) auf dem Objekt (200) schließt (402).

## Claims

1. System comprising an apparatus (1000) for detecting a safety color, and safety color (300), wherein the safety color (300) has a spectral characteristic (SC) having a first wavelength range (B1) and a second wavelength range (B2) and a third wavelength range (B3) between the first wavelength range (B1) and the second wavelength range (B2), wherein the spectral characteristic (SC) has a flank (F) in the third wavelength range (B3), wherein the apparatus (1000) has at least one optical sensor module (100; 100a, 100b, 100c) with at least one image sensor (102) and an optical filter device (104) which is associated with the image sensor (102) and which implements at least two different filter curves (F1, F4) with associated passbands, wherein the associated passbands of the two different filter curves (F1, F4) are selected such that the flank (F) of the spectral characteristic (SC) of the safety color (300) is between the two associated passbands, wherein the apparatus (1000) is designed to capture at least one original image (img) of the object (200) by means of the image sensor (102) and to infer the presence of the safety color (300) on the object (200) on the basis of the spectral characteristic (SC) of the safety color (300) depending on the at least one original image of the object (200).

2. System according to claim 1, wherein the optical filter device (104) comprises at least one first narrow-band optical filter.

3. System according to claim 2, wherein the optical filter device (104) comprises at least two narrow-band optical filters.

4. System according to any of claims 2 to 3, wherein the optical filter device (104) comprises four narrow-band optical filters.

5. System according to any of the preceding claims,
wherein the optical filter device (104) is arranged on the image sensor (102), in particular attached to an optical surface of the image sensor (102).

6. System according to any of the preceding claims,
wherein the at least two different filter curves (F1, F4) and/or at least one of the narrow-band optical filters has a passband between approximately 10 nanometers, nm, and approximately 50 nm, in particular between approximately 1 nm and approximately 10 nm.

7. System according to any of the preceding claims,
wherein the apparatus (1000) has a light source (L) for illuminating the object (200) with a first light (L1), wherein a spectrum (S) of the first light (L1) has a wavelength range (B3) of the flank (F) of the spectral characteristic (SC) of the safety color (300).

8. System according to at least one of claims 2 to 7, wherein at least one of the narrow-band optical filters, but preferably all of the narrow-band optical filters, is or are evenly distributed over the image elements of the image sensor (102).

9. System according to at least one of the preceding claims, wherein the at least one image sensor (102) has a matrix-shaped arrangement of image elements which are arranged in rows and columns, wherein the optical filter device (104) has four narrow-band optical filters (A, B, C, D) with a different passband in each case, wherein a first optical filter (A) and a second optical filter (B) of the four narrow-band optical filters (A, B, C, D) are arranged in particular in a first row (Z1) of image elements in successive columns of image elements, wherein a third optical filter (C) and a fourth optical filter (D) of the four narrow-band optical filters (A, B, C, D) are arranged, in particular alternating, in particular in a second row (Z2) following the first row (Z1) of image elements in successive columns of image elements, and in particular wherein a distribution of the four narrow-band optical filters (A, B, C, D) is repeated for the further lines (Z3, Z4, ...) of image elements of the image sensor (102) according to the first line (Z1) and the second line (Z2).

10. System according to at least one of the preceding claims, wherein a control device (110) is provided which is designed for controlling operation of the sensor module (100) and/or for controlling operation of the light source (L), wherein in particular the control device (110) is designed to carry out at least one of the following processes: - detecting at least one barcode and/or other one-dimensional or multidimensional codes on the original image, analysing a movement of at least one object, communicating with an external unit (2000), controlling an external unit (2000), reading out data from the image sensor (102).

11. System according to at least one of the previous claims, wherein the at least one image sensor (102) is a CMOS or CCD sensor or Super CCD sensor.

12. System according to at least one of the preceding claims, wherein the apparatus (1000) is designed to check a spectral composition of at least one image region of the original image to a degree of correspondence with the safety color.

13. System according to at least one of the preceding claims, wherein the apparatus (1000) is configured to find at least one safety character in the original image.

14. System according to at least one of the preceding claims, wherein at least a first image sensor (102a) and a second image sensor (102b) are provided, wherein the optical filter device (104') has at least a first optical filter (OF1) associated with the first image sensor (102a) and at least a second optical filter (OF2) associated with the second image sensor (102b), wherein the apparatus (1000') is designed to capture at least one first original image (img1) of the object (200) by means of the first image sensor (102a) and at least one second original image (img2) of the object by means of the second image sense (102b) and to infer the presence of the color, in particular the safety color (300), on the object (200) depending on the at least one first and the at least one second original image (img1, img2) of the object (200).

15. Use of a system according to any of claims 1 to 14 for detecting a safety color (300), wherein the safety ink (300) has a spectral characteristic (SC) having a first wavelength range (B1) and a second wavelength range (B2) and a third wavelength range (B3) between the first wavelength range (B1) and the second wavelength range (B2), wherein the spectral characteristic (SC) has a flank (F) in the third wavelength range (B3), wherein the apparatus (1000) has an optical sensor module (100; 100a, 100b, 100c) with at least one image sensor (102) and an optical filter device (104) which is associated with the image sensor and which implements at least two different filter curves (F1, F4) with associated passbands, wherein the associated passbands of the two different filter curves (F1, F4) are selected such that the flank (F) of the spectral characteristic (SC) of the safety color is between the two associated passbands, wherein the apparatus (1000) captures (400) at least one original image (img) of an object (200) by means of the image sensor (102) and infers (402) the presence of the safety color (300) on the object (200) on the basis of the spectral characteristic (SC) of the safety color (300) depending on the at least one original image (img) of the object (200) .

## Revendications

1. Système comprenant un dispositif (1000) pour la détection d'une couleur de sécurité et une couleur de sécurité (300), la couleur de sécurité (300) présentant une caractéristique spectrale (SC) comportant un premier intervalle de longueur d'onde (B1) et un deuxième intervalle de longueur d'onde (B2) et un troisième intervalle de longueur d'onde (B3) situé entre le premier intervalle de longueur d'onde (B1) et le deuxième intervalle de longueur d'onde (B2), la caractéristique spectrale (SC) présentant un flanc (F) dans le troisième intervalle de longueur d'onde (B3), le dispositif (1000) présentant au moins un module de capteurs optiques (100; 100a, 100b, 100c) comprenant au moins un capteur d'image (102), un dispositif de filtres optiques (104) associé au capteur d'image (102), lequel réalise au moins deux courbes de filtre (F1, F4) différentes comprenant des bandes passantes associées, les bandes passantes associées des deux courbes de filtre (F1, F4) différentes étant choisies de telle façon que le flanc (F) de la caractéristique spectrale (SC) de la couleur de sécurité (300) se situe entre les deux bandes passantes associées, le dispositif (1000) étant conçu pour prendre, au moyen du capteur d'image (102), au moins une image originale (img) de l'objet (200) et pour conclure, en fonction de l'au moins une image originale de l'objet (200), sur la base de la caractéristique spectrale (SC) de la couleur de sécurité (300), à la présence de la couleur de sécurité (300) sur l'objet (200).

2. Système selon la revendication 1, dans lequel le dispositif de filtres optiques (104) présente au moins un premier filtre optique à bande étroite.

3. Système selon la revendication 2, dans lequel le dispositif de filtres optiques (104) présente au moins deux filtres optiques à bande étroite.

4. Système selon l'une quelconque des revendications 2 à 3, dans lequel le dispositif de filtres optiques (104) présente quatre filtres optiques à bande étroite.

5. Système selon l'une des revendications précédentes, dans lequel le dispositif de filtres optiques (104) est agencé sur le capteur d'image (102), en particulier monté sur une surface optique du capteur d'image (102).

6. Système selon l'une des revendications précédentes, dans lequel les au moins deux courbes de filtre (F1, F4) différentes et/ou au moins un des filtres optiques à bande étroite présentent une bande passante comprise entre environ 10 nanomètres, nm, et environ 50 nm, en particulier entre environ 1 nm et environ 10 nm.

7. Système selon l'une des revendications précédentes, dans lequel le dispositif (1000) présente une source de lumière (L) pour l'éclairage de l'objet (200) avec une première lumière (L1), un spectre (S) de la première lumière (L1) présentant un intervalle de longueur d'onde (B3) du flanc (F) de la caractéristique spectrale (SC) de la couleur de sécurité (300).

8. Système selon au moins l'une des revendications 2 à 7, dans lequel au moins un des filtres optiques à bande étroite, de préférence cependant tous les filtres optiques à bande étroite, est ou sont distribué(s) de manière régulière sur les éléments d'image du capteur d'image (102).

9. Système selon au moins l'une des revendications précédentes, dans lequel l'au moins un capteur d'image (102) présente un agencement matriciel d'éléments d'image, qui sont agencés en rangées et colonnes, le dispositif de filtres optiques (104) présentant quatre filtres optiques à bande étroite (A, B, C, D) présentant respectivement une bande passante différente, en particulier dans une première ligne (Z1) d'éléments d'image, un premier filtre optique (A) et un deuxième filtre optique (B) des quatre filtres optiques (A, B, C, D) étant agencés, en particulier en alternance, dans des colonnes successives d'éléments d'image, en particulier dans une deuxième ligne (Z2) d'éléments d'image suivant la première ligne (Z1) un troisième filtre optique (C) et un quatrième filtre optique (D) des quatre filtres optiques à bande étroite (A, B, C, D) étant agencés, en particulier en alternance, dans des colonnes successives des éléments d'image, et en particulier une distribution des quatre filtres optiques à bande étroite (A, B, C, D) se répétant pour les autres lignes (Z3, Z4, ...) d'éléments d'image du capteur d'image (102) conformément à la première ligne Z1 et à la deuxième ligne (Z2).

10. Système selon au moins l'une des revendications précédentes, dans lequel un dispositif de commande (110) est prévu, qui est conçu pour la commande d'un fonctionnement du module de capteurs (100) et/ou pour la commande d'un fonctionnement de la source de lumière (L), le dispositif de commande (110) étant en particulier conçu pour l'exécution d'au moins l'un des procédés suivants: - détection d'au moins un code à barres et/ou d'autres codes unidimensionnels ou multidimensionnels sur l'image originale, analyse d'un déplacement d'au moins un objet, communication avec une unité externe (2000), commande d'une unité externe (2000), lecture de données du capteur d'images (102).

11. Système selon au moins l'une des revendications précédentes, dans lequel l'au moins un capteur d'image (102) est un capteur CMOS ou CCD ou un capteur super CCD.

12. Système selon au moins l'une des revendications précédentes, dans lequel le dispositif (1000) est conçu pour contrôler une composition spectrale d'au moins une zone d'image de l'image originale quant à un degré de correspondance avec la couleur de sécurité.

13. Système selon au moins l'une des revendications précédentes, dans lequel le dispositif (1000) est conçu pour repérer au moins un signe de sécurité dans l'image originale.

14. Système selon au moins l'une des revendications précédentes, dans lequel au moins un premier capteur d'image (102a) et un deuxième capteur d'image (102b) sont prévus, le dispositif de filtres optiques (104') présentant au moins un premier filtre optique (OF1) associé au premier capteur d'images (102a) et au moins un deuxième filtre optique (OF2) associé au deuxième capteur d'image (102b), le dispositif (1000') étant conçu pour prendre, au moyen du premier capteur d'image (102a), au moins une première image originale (img1) et, au moyen du deuxième capteur d'image (102b), au moins une deuxième image originale (img2) de l'objet (200) et pour conclure, en fonction de l'au moins une première et de l'au moins une deuxième image originale (img1, img2) de l'objet (200), à la présence de la couleur, en particulier de la couleur de sécurité (300), sur l'objet (200).

15. Utilisation d'un système selon l'une des revendications 1 à 14 pour la détection d'une couleur de sécurité (300), la couleur de sécurité (300) présentant une caractéristique spectrale (SC) comprenant un premier intervalle de longueur d'onde (B1) et un deuxième intervalle de longueur d'onde (B2) et un troisième intervalle de longueur d'onde (B3) situé entre le premier intervalle de longueur d'onde (B1) et le deuxième intervalle de longueur d'onde (B2), la caractéristique spectrale (SC) présentant un flanc (F) dans le troisième intervalle de longueur d'onde (B3), le dispositif (1000) présentant un module de capteurs optiques (100; 100a, 100b, 100c) comprenant au moins un capteur d'image (102), un dispositif de filtres optiques (104) associé au capteur d'image, lequel réalise au moins deux courbes de filtre (F1, F4) différentes comprenant des bandes passantes associées, les bandes passantes associées des deux courbes de filtre (F1, F4) différentes étant choisies de telle façon que le flanc (F) de la caractéristique spectrale (SC) de la couleur de sécurité se situe entre les deux bandes passantes associées, le dispositif (1000) prenant (400), au moyen du capteur d'image (102), au moins une image originale (img) d'un objet (200) et concluant (402), en fonction de l'au moins une image originale (img) de l'objet (200), sur la base de la caractéristique spectrale (SC) de la couleur de sécurité (300), à la présence de la couleur de sécurité (300) sur l'objet (200).
